# EUROPÄISCHE PATENTSCHRIFT

(11) **EP 2 102 026 B1**
(45) Veröffentlichungstag und Bekanntmachung des Hinweises auf die Patenterteilung: **12.06.2013**
(21) Anmeldenummer: 07819883.5
(22) Anmeldetag: 21.11.2007
(51) Int. Cl.: B60K 15/03, B60K 15/077

(54) **KRAFTSTOFFBEHÄLTER AUS THERMOPLASTISCHEM KUNSTSTOFF MIT FUNKTIONSEINBAUTEN ZUR BE- UND ENTLÜFTUNG, ZUR KRAFTSTOFFENTNAHME ODER DERGLEICHEN**
FUEL TANK MADE OF THERMOPLASTIC SYNTHETIC MATERIAL WITH FUNCTIONAL BUILT-IN STRUCTURES FOR VENTILATION AND DEAERATION, FOR THE WITHDRAWING OF FUEL OR THE LIKE
RÉSERVOIR DE CARBURANT EN MATIÈRE THERMOPLASTIQUE AVEC PIÈCES INCORPORÉES FONCTIONNELLES POUR LA VENTILATION ET L'AÉRATION, POUR LE PRÉLÈVEMENT DE CARBURANT OU SIMILAIRE

(30) Priorität: 15.12.2006 DE 102006059799
(43) Veröffentlichungstag der Anmeldung: 23.09.2009
(73) Patentinhaber: Kautex Textron GmbH & Co. KG, 53229 Bonn (DE)
(72) Erfinder: BORCHERT, Matthias, 53179 Bonn (DE); EULITZ, Dirk, 53115 Bonn (DE); GEBERT, Klaus, 47877 Willich (DE); KRÄMER, Timo, 57632 Rott (DE); LORENZ, Harald, 53474 Bad Neuenahr-Ahrweiler (DE); WOLTER, Gerd, 53639 Königswinter (DE)
(74) Vertreter: polypatent BGL
(86) Internationale Anmeldenummer: PCT/EP2007/010068
(87) Internationale Veröffentlichungsnummer: WO 2008/071299

(56) Entgegenhaltungen:
- DE-A1- 1 704 387
- DE-A1- 10 328 206
- DE-A1- 19 909 041

## Beschreibung

Die Erfindung betrifft einen Kraftstoffbehälter aus thermoplastischem Kunststoff mit Funktionseinbauten zur Be- und Entlüftung, zur Kraftstpffentnahme oder dergleichen.

Die Erfindung betrifft insbesondere einen extrusionsblasgeformten Kraftstoffbehälter aus thermoplastischem Kunststoff. Solche Behälter werden üblicherweise einstückig aus einem oder mehreren schlauchförmigen Vorformlingen gefertigt, die mittels Gasdruck an die Wandung eines mehrteiligen Formwerkzeuges angelegt werden bzw. in diesem aufgeweitet werden. Je nach dem, wie die Ausformung des Behälters im Werkzeug bewerktstelligt wird, werden Einbauteile in den Behälter entweder nach dessen Fertigstellung durch eine oder mehrere Montageöffnungen eingebracht und fixiert oder die Funktionsbauteile werden bereits während der Ausformung des Behälters in diesen eingebracht. Wird der Behälter aus einem Schlauch blasgeformt, so ist der Durchmesser des Vorformlings in der Regel so bemessen, dass dieser über einen Einbauteilehalter mit darauf angeordneten Einbauteilen extrudiert werden kann.

Die Verschweißung von Einbauteilen mit der Innenwandung des Behälters in der ersten Hitze bei der Ausformung des Behälters hat sich insbesondere bei größeren Einbauteilen wie Schwallbehältern oder dergleichen als unvorteilhaft erwiesen, da die Auskühlung der Behälterwandung nach Fertigstellung des Artikels in den Bereichen, in denen auf der Innenwandung des Behälters Schweißflächen vorgesehen sind, behindert wird. Wird beispielsweise in dem Kraftstoffbehälter ein Schwallbehälter mit seiner Bodenaufstandsfläche großflächig mit der Innenwandung des Behälters verschweißt, so ist die Auskühlung der Behälterwandung beim Erkalten des Artikels großflächig behindert. Insbesondere die Innenkühlung des fertigen Artikels durch Gas/LuftSpülung wird beeinträchtigt. Durch die bereichsweise größere Materialakkumulation an der Behälterinnenwandung stellt sich ggf. ein Schrumpfungsverzug des Materials ein, der außen am Behälter sichtbar ist.

Grundsätzlich wäre es jedoch aus Gründen der verfahrenstechnischen Vereinfachung wünschenswert, elnstückige aus thermoplastischem Kunststoff hergestellte Behälter bereitzustellen, die mit Einbauten bzw. Einbauteilen bestückt sind, welche bei der Herstellung in der ersten Hitze mit der Behälterwandung verbunden wurden.

Aus der DE 103 28 206 ist eine Vorrichtung zum Fördern von Kraftstoff aus einem Vorratsbehälter zu einer Brennkraftmaschine bekannt, bei welcher eine in einem Schwallbehälter anordnete Saugstrahlpumpe einen zweiteiligen Mischkanal aufweist, von welchem ein Teil durch die dem Vorratsbehälter zugewandte Unterseite des Topfbodens ausgebildet wird.

Aus der DE 199 09 041 A1 ist eine Anordnung von mehreren Behältern zum Speichern von Flüssigkeit nach den Oberbegriff von Anspruch 1 vorgesehen, wobei die Behälter jeweils eine Wandung mit aus Kunststoff im Spritzgussvertahren gefertigten und miteinander verschweißen Schalenteilen und jeweils einen Anschluss zum Nachfüllen der Flüssigkeiten aufweisen. Jeweils eines der Schalenteile ist zur Begrenzung mehrerer Behälter ausgestaltet. Durch diese Gestaltung lassen sich zwei Behälter mit einem gemeinsamen Schalenteil versehen und damit als bauliche Einheit gestalten. Dadurch können beispielsweise Kraftstoff und Wasser In gemeinsamen baulichen Einheiten von zwei Behältern gespeichert werden.

Der Erfindung liegt die Aufgabe zugrunde, ein Verfahren zur Herstellung eines Kraftstoffbehälters sowie einen Kraftstoffbehälter bereitzustellen, bei dem die Funktionseinbauteile während der Ausformung des Behälters mit diesem so verbunden wurden, dass die Verbindung außen am Behälter möglichst wenig sichtbar ist.

Die Aufgabe wird gelöst durch die Merkmale der nebengeordneten Ansprüche 1 und 2. Vorteilhafte Ausgestaltungen der Erfindung ergeben sich aus den Unteransprüchen.

Die Erfindung kann dahingehend zusammengefasst werden, dass in den Kraftstoffbehälter solche Funktionsbauteile eingebracht werden, die erst in Zusammenwirkung mit der Innenwandung des Behälters die volle Funktionalität erhalten, sodass die Innenwandung des Behälters einen Teil der Funktionalität des betreffenden Bautells übernimmt und auch als Begrenzungswand des Funktionsbauteils wirkt. Als Funktionseinbauten können beispielsweise Profilabschnitte vorgesehen sein, die mit der Innenwandung des Behälters so verschweisst sind, dass sie mit der Innenwandung des Behälters zumindest abschnittsweise geschlossene Kanäle oder Volumlna bilden.

Beispielsweise können die Profilabschnitte im Querschnitt halbkreisförmig, U-förmig oder V-förmig ausgebildet sein.

Bei der Erfindung ist wenigstens ein Schwallbehälter für eine Kraftstoffpumpe vorgesehen, der auf seiner in Einbaulage der Innenwandung des Behälters zugekehrten Seite offen ist und dessen Begrenzungswand umlaufend stoffschlüssig mit der Innenwandung des Behälters verbunden ist. Auf diese Art und Weise wird eine Materialansammlung an der Behälterinnenwand vermieden, welche dadurch entsteht, dass der Boden des Schwallbehälters vollflächig auf der Innenwandung des Kraftstoffbehälters aufliegt. Bei der erfindungsgemäßen Variante bildet der Kraftstoffbehälter selbst den Boden des Schwallbehälters. Auf diese Art und Weise kann in vorteilhafter Weise ein Schwallbehälter Anwendung finden, der auf seiner der Innenwandung des Behälters abgekehrten Seite zumindest teilweise geschlossen ausgebildet ist. Ein solcher Schwallbehälter kann beispielsweise als einstückig durch Spritzgießen hergestelltes Kunststoffbauteil ausgebildet sein. Die Möglichkeit, den Schwallbehälter einstückig oder einteilig ausbilden zu können, ergibt sich insbesondere dadurch, dass der Schwallbehälter bei der Montage bzw. Verbindung mit der Innenwandung des Kraftstoffbehälters durch die Wandung des Kraftstoffbehälters verschlossen wird.

Dass die der Innenwandung des Behälters abgekehrte Seite des Schwallbehälters geschlossen ausgebildet sein soll, ist selbstverständlich so zu verstehen, dass der Schwallbehälter Anschlüsse, Nippel oder Durchbrüche für in diesen hereinzuführende bzw. aus diesem herauszuführende Leitungen aufweisen kann.

Zweckmäßigerweise ist die Begrenzungswand des Schwallbehälters an der in Einbaulage der Innenwandung des Behälters zugekehrten Seite mit einem umlaufenden Befestigungsflansch versehen.

Um eine möglichst gute umlaufende stoffschlüssige Verbindung zwischen Befestigungsflansch einerseits und Innenwandung des Behälters andererseits zu erzielen, kann die Fügefläche des Befestigungsflansches profiliert ausgebildet sein. Alternativ kann die Fügefläche des Befestigungsflansches mit Schmelzvorsprüngen und/oder mit Schmelzansätzen versehen sein. Hierunter sind dünne Materialvorsprünge oder Materialansätze, Rippen oder Stege zu verstehen, die eine verhältnismäßig geringe Wärmekapazität haben und bei Berührung der betreffenden Teile der Fügefläche mit der noch heißen Innenwandung des Behälters aufgrund ihrer geringen Wärmekapazität aufschmelzen und so zur Bildung einer zuverlässigen Schweißverbindung beitragen.

Die Begrenzungswandung des Schwallbehälters kann zumindest bereichsweise und bezogen auf den Umfang des Schwallbehälters zumindest abschnittsweise flexibel ausgebildet sein. Beispielsweise kann die Begrenzungswandung des Schwallbehälters ein umlaufendes Filmscharnier oder dergleichen aufweisen, sodass der Winkel zwischen dem Befestigungsflansch und der Behälterwandung variabel ist. So können in vorteilhafter Art und Weise Unebenheiten der Innenwandung des Behälters ausgeglichen werden. Bekanntermaßen besitzen gerade extrusionsblasgeformte Bauteile geringfügige Wandstärkentoleranzen, die bei der Auslegung von mit der Behälterwandung zu verschweißenden Einbauteilen zu berücksichtigen sind, zumindest bei solchen Einbauteilen, die umlaufend dicht mit der Behälterinnenwandung verschweißt sein müssen, wie das beispielsweise bei einem Schwallbehälter der Fall sein muss.

Wenn als Einbauteil Profilabschnitte zur Ausbildung von Kanälen oder Aufnahmen für Leitungen vorgesehen sein sollen, besteht die Möglichkeit, diese Einbauteile insgesamt von ihrer Wandstärke so auszulegen, dass Wandstärkentoleranzen der Behälterinnenwandung beim Fügen der Einbauteile ausgeglichen werden können.

Die Erfindung ist nachstehend anhand eines in den Zeichnung dargestellten Ausführungsbeispiels erläutert.

Es zeigen:
- Figur 1: einen Schnitt durch einen Kraftstoffbehälter gemäß der Erfindung,
- Figur 2: eine vergrößerte Schnittansicht des Details II in Figur 1,
- Figur 3: eine alternative Ausgestaltung des in Figur 2 dargestellten Befestigungsflansches des in dem Kraftstoffbehälter fixierten Schwallbehälters,
- Figur 4: eine weitere Ausgestaltung des Schwallbehälters im Bereich seiner Befestigung mit der Innenwandung des Behälters,
- Figur 5: eine vierte Variante des Schwallbehälters im Bereich seiner Befestigung mit der Innenwandung des Kraftstoffbehälters,
- Figur 6: ein fünftes Ausführungsbeispiel gemäß der Erfindung,
- Figur 7: ein sechstes Ausführungsbeispiel gemäß der Erfindung,
- Figur 8: einen Teilschnitt durch den Schwallbehälter des Kraftstoffbehälters gemäß der Erfindung, bei dem übertrieben eine nicht ebene Aufstands- und Befestigungsfläche auf der Innenwandung des Behälters dargestellt ist,
- Figuren 9 und 10: ein siebtes Ausführungsbeispiel gemäß der Erfindung und
- Figuren 11 und 12: ein nicht erfindungsgemäßes Ausführungsbeispiel

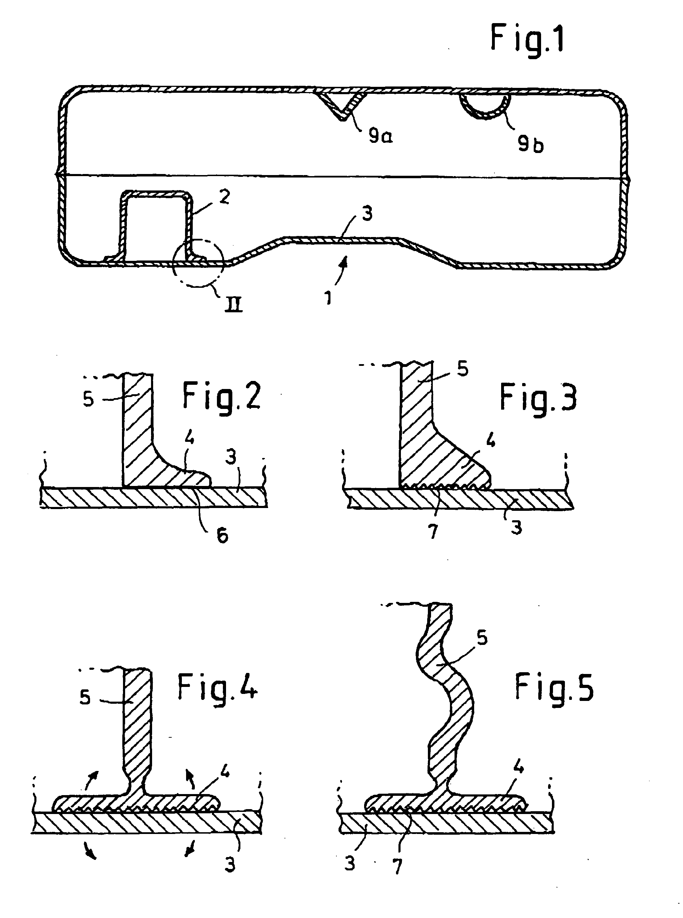

In Figur 1 ist eine vereinfachte Schnittansicht eines Kraftstoffbehälters 1 gemäß der Erfindung dargestellt. Der Kraftstoffbehälter 1 ist als extrusionsblasgeformter Kunststoff-Hohlkörper ausgebildet. Dieser wurde durch Extrusionsblasen eines insgesamt sechsschichtigen Coextrudats aus thermoplastischem Material mit wenigstens einer Barriereschicht für Kohlenwasserstoffe hergestellt. Dabei wurden zwei bahnförmige Vorformlinge aus thermoplastischem Material zwischen die geöffneten Teile eines insgesamt dreiteiligen Blasformwerkzeugs extrudiert. Das Blasformwerkzeug zur Herstellung eines solchen Kraftstoffbehälters 1 umfasst wenigstens zwei Außenformen und eine Mittelform, wobei jede der Außenformen eine Teilkavität bildet, die jeweils eine Hälfte des zu fertigenden Hohlkörpers definiert. In einem ersten Verfahrensschritt werden die jeweils bahnförmigen Vorformlinge zwischen einer Außenform und der Mittelform extrudiert oder angeordnet. Dabei schließen sich die Außenformen gegen die Mittelform. Auf diese Art und Weise wird ein geschlossenes Formnest gebildet, wobei mittels Gasdruckbeaufschlagung der Mittelform und/oder Evakuierung der Außenformen die Vorformlinge jeweils in die Teilkavität an der jeweiligen Außenform eingezogen werden. In der Mittelform sind vorzugsweise auf einem verfahrbaren Rahmen Bauteilträger mit auf diesen angeordneten Bauteilen vorgesehen. Über beispielsweise hydraulisch oder pneumatisch betätigbare Zylinder sind die Bauteilträger in der Mittelform verfahrbar angeordnet. Mittels dieser werden innerhalb des Behälters Funktionsbauteile platziert, derart, dass diese beispielsweise in entsprechende Aufnahmen an der Innenwandung des Behälters eingesetzt werden.

Es ist möglich auf diese Art und Weise Funktionsbauteile aus Kunststoff während der Ausformung des Behälters mit der noch plastischen Innenwandung des Behälters zu verschweißen.

Selbstverständlich kann ein Kraftstoffbehälter, wie er nachstehend noch im Detail beschrieben wird, auch durch Tiefziehen oder Thermoformen erhalten werden, wobei ebenfalls bei einem solchen Verfahren eine Verschweißung von Funktionsbauteilen mit der Innenwandung des Behälters erfolgen kann.

Der in Figur 1 dargestellte Behälter ist als Kraftstoffbehälter 1 ausgebildet. Das hier beschriebene Prinzip ist jedoch ohne Weiteres auf andere geschlossene Behälter aus Kunststoff mit in diesen vorzusehenden Funktionsbauteilen übertragbar.

Der Kraftstoffbehälter 1 ist stark vereinfacht dargestellt. Dieser umfasst die üblichen Be- und Entlüftungsleitungen sowie wenigstens einen Einfüllstutzen und Leitungen zur Kraftstoffentnahme zu einer Brennkraftmaschine eines Kfz. Üblicherweise wird der Kraftstoff über mehrere Saugstrahlpumpen aus verschiedenen Teilvolumina des hier aus Vereinfachungsgründen nur mit einem einzigen Volumen dargestellten Kraftstoffbehälters 1 in einen im Kraftstoffbehälter 1 angeordneten Schwallbehälter 2 gefördert. Innerhalb des Schwallbehälters 2, der auch als Schlingertopf bezeichnet wird, ist in bekannter Art und Weise wenigstens eine elektrische Kraftstoffförderpumpe angeordnet, die aus dem Volumen des Schwallbehälters zum Motor der Brennkraftmaschine fördert, Ebenfalls aus Vereinfachungsgründen ist die Kraftstoffpumpe hier nicht dargestellt. Der Schwallbehälter 2 dient dazu, sicherzustellen, dass die Kraftstoffpumpe während aller Fahrzustände des Kfz, d. h. bei Beschleunigung, Verzögerung und Kurvenfahrt, mit Kraftstoff versorgt ist.

Erfindungsgemäß ist vorgesehen, dass beispielsweise der Schwallbehälter 2 mit der Innenwandung 3 des Kraftstoffbehälters 1 derart verbunden ist, dass dieser ein von dem Füllvolumen des Kraftstoffbehälters 1 getrenntes Volumen definiert, wobei die Innenwandung 3 des Behälters unmittelbar als Begrenzungswand des Volumens dient. Mit anderen Worten, der Schwallbehälter 2 gemäß dem hier beschriebenen Ausführungsbeispiel ist ohne Boden ausgebildet. Der Boden wird durch die Innenwandung 3 des Kraftstoffbehälters 1 gebildet, wobei der Schwallbehälter 2 auf seiner der Innenwandung 3 zugekehrten Seite mit einem Befestigungsflansch 4 versehen ist, der umlaufend dicht mit der Innenwandung 3 des Kraftstoffbehälters 1 verschweißt ist. Hierdurch ist es möglich, den Schwallbehälter 2 als einstückiges, spritzgegossenes Bauteil auszubilden, an das alle wesentlichen Elemente angeformt sind. Bei einem auf herkömmliche Art und Weise ausgebildeten Schwallbehälter 2 mit einem Boden ist es erforderlich, diesen ggf. mit einem Deckelverschluss zu versehen, der dann mit dem Schwallbehälter 2 verrastet wird. Dies ist erforderlich, um die Kraftstoffpumpe und ggf. einen Füllstandsgeber oder dergleichen in dem Schwallbehälter 2 vorzumontieren, bevor dieser in den Kraftstoffbehälter 1 verbracht wird.

Erfindungsgemäß ist vorgesehen, dass der Schwallbehälter 2 während der Ausformung des Kraftstoffbehälters 1 stoffschlüssig mit der Innenwandung 3 desselben verbunden wurde. Und zwar derart, wie eingangs bereits erwähnt, dass die Innenwandung 3 eine Begrenzungswand des Schwallbehälters 2 bildet.

Wie den Figuren 2 bis 7 zu entnehmen ist, kann die Begrenzungswand 5 des Schwallbehälters 2 im Bereich des Befestigungsflansches 4 ein L- oder T-förmiges Profil mit einer der Innenwandung 3 zugekehrten Fügefläche 6 aufweisen. Die Fügefläche 6 des Befestigungsflansches 4 ist bei dem zweckmäßigerweise im Querschnitt rund ausgebildeten Schwallbehälter 2 voll umlaufend ausgebildet, sodass dieser randseitig dichtend mit der Innenwandung 3 des Kraftstoffbehälters 1 verschweißt werden kann.

Hierzu ist die Fügefläche 6 mit Schweißrippen oder Schweißfortsätzen 7 versehen, deren Wärmekapazität so bemessen ist, dass diese bei Berührung mit der noch heißen und plastischen Innenwandung 3 des Kraftstoffbehälters 1 während dessen Ausformung aufschmelzen und so eine innige stoffschlüssige Verbindung von Innenwandung 3 einerseits und Fügefläche 6 andererseits herstellen.

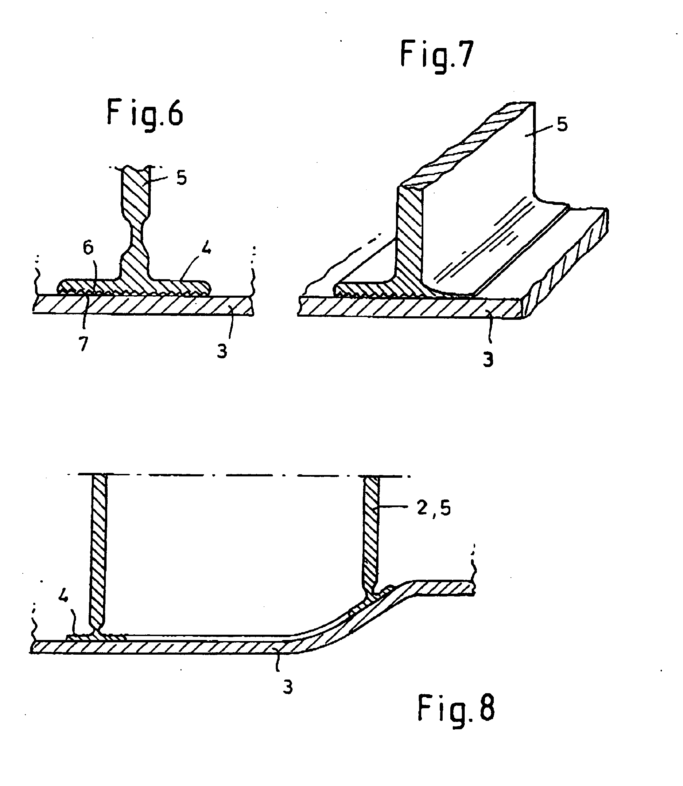

Um Wanddickentoleranzen der Behälterwandung oder gar Unebenheiten der Innenwandung ausgleichen zu können, ist die Begrenzungswand 5, wie dies in den Figuren 4 bis 8 dargestellt ist, flexibel ausgebildet, derart, dass der Befestigungsflansch 4 in gewissen Grenzen flexibel bzw. bewegbar ist und beispielsweise die in Figur 8 auf der rechten Seite der Abbildung gezeigte abgewinkelte (nicht rechtwinklige) Position bzgl. der Begrenzungswand 5 des Schwallbehälters 2 einnehmen kann. Die Flexibilität des Befestigungsflansches 4 in Bezug auf die Begrenzungswand 5 kann auf verschiedene Art und Weise erzielt werden, beispielsweise dadurch, dass ein umlaufendes Filmscharnier vorgesehen wird. Alternativ kann der Schwallbehälter aus verschiedenen Kunststoffen hergestellt worden sein, wobei beispielsweise über die Höhe der Begrenzungswand 5 verschieden harte Kunststoffe vorgesehen sein können (beispielsweise hart-weich-hart). Auf diese Art und Weise ist ein Höhenausgleich etwaiger Vorsprünge in der Innenwandung 3 des Kraftstoffbehälters 1 möglich. Je nach Breite und Ausgestaltung des Befestigungsflansches 4 können in diesem zur Vermeidung von unzulässigen Spannungen bedingt durch die Kreisringform der Fügefläche 6 Entlastungsschlitze 8 vorgesehen sein.

Die Erfindung wurde vorstehend anhand eines Schwallbehälters 2 erläutert.

Wie dies ebenfalls in Figur 1 dargestellt ist, können als Einbauteile im Sinne der Erfindung auch Profilabschnitte 9 vorgesehen sein, die mit der Innenwandung 3 des Kraftstoffbehälters 1 während der Ausformung desselben so verschweißt wurden, dass diese entweder geschlossene Kanäle für Luft und/oder Kraftstoff oder zur Aufnahme von im Querschnitt runden Leitungen bilden. Im letzteren Fall können die Profilabschnitte 9a, b nur abschnittsweise in diesen aufgenommene Leitungen umgreifen und halten.

Der in Figur 1 dargestellte Profilabschnitt 9a ist im Querschnitt V-förmig ausgebildet, der in Figur 1 als 9b bezeichnete Profilabschnitt ist im Querschnitt U-förmig ausgebildet. Andere Geometrien sind ohne Weiteres im Rahmen der Erfindung denkbar. Die Profilabschnitte 9a, b machen von dem der Erfindung zugrundeliegenden Gedanken Gebrauch, die Innenwandung 3 des Behälters als Begrenzungswand eines von dem Behälters zu trennenden Volumens zu nutzen. Auf diese Art und Weise werden Klemm- oder Rastbefestigungen für Leitungen eingespart.

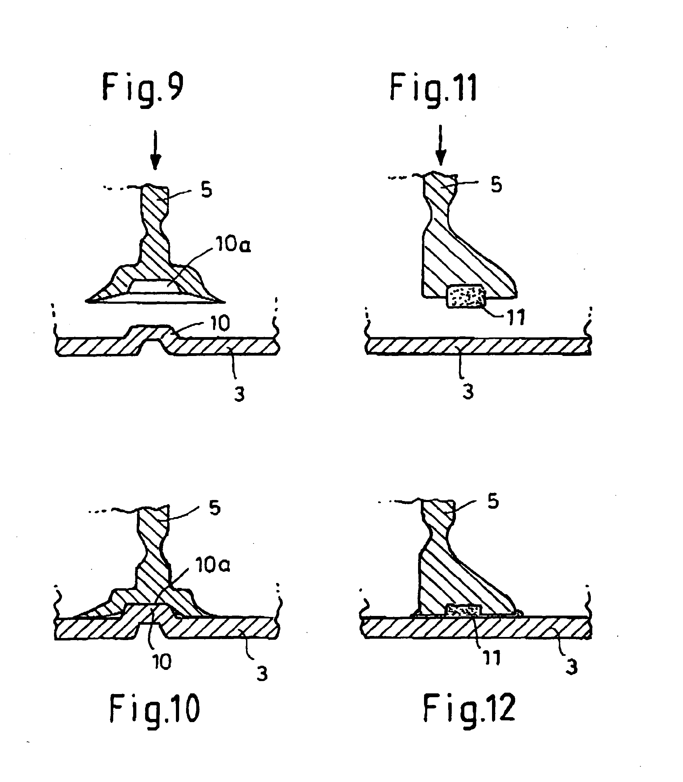

Wie dies in den Figuren 9 und 10 dargestellt ist, kann die Innenwandung 3 des Kraftstoffbehälters mit nach innen hervorstehenden Rippen 10 oder dergleichen versehen sein, die mit entsprechenden Nuten 10a des Schwallbehälters 2 zusammenwirken und dessen unverrückbare Festlegung auf der Innenwandung 3 des Kraftstoffbehälters 1 erleichtern.

Selbstverständlich können anstatt der Rippen 10 auf der Innenwandung 3 des Kraftstoffbehälters 1 auch dort Nuten vorgesehen sein, die mit entsprechenden Rippen des Schwallbehälters 2 zusammenwirken.

In den Figuren 11 und 12 ist eine Variante des Schwallbehälters dargestellt, der aus einem Kunststoff besteht, welcher nicht mit der Innenwandung 3 des Kraftstoffbehälters 1 kompatibel im Sinne von verschweißbar ist. In diesem Fall ist zwischen der Fügefläche 6 der Begrenzungswand 5 und der Innenwandung 3 des Kraftstoffbehälters 1 ein Heißklebstoff 11 oder ein anderer geeigneter Haftvermittler vorgesehen, der in Berührung mit der heißen Innenwandung 3 des Kraftstoffbehälters 1 eine stoffschlüssige Verbindung herstellt.

### Bezugszeichenliste

| | |
|---|---|
| 1 | Kraftstoffbehälter |
| 2 | Schwallbehälter |
| 3 | Innenwandung |
| 4 | Befestigungsflansch |
| 5 | Begrenzungswand |
| 6 | Fügefläche |
| 7 | Schweißfortsätze |
| 8 | Entlassungsschlitze |
| 9a, b | Profilabschnitte |
| 10 | Rippen |
| 10a | Nuten |
| 11 | Heißklebstoff |

## Patentansprüche

1. Kraftstoffbehälter aus thermoplastischem Kunststoff mit Funktionseinbauteilen zur Be- und Entlüftung, zur Kraftstoffentnahme oder dergleichen, wobei ein Funktionseinbauteil derart stoffschlüssig mit der Innenwandung (3) des Behälters verbunden ist, dass es mit der Behälterwandung ein von dem Füllvolumen des Behälters getrenntes Volumen definiert, derart, dass die Innenwandung (3) des Behälters unmittelbar als eine erste Begrenzungswand dieses Volumens dient, **dadurch gekennzeichnet, dass** das Funktionseinbauteil ein Schwallbehälter (2) mit einer eigenen Begrenzungswand (5) und mit einer in dem Schwallbehälter angeordneten elektrischen Kraftstoffförderpumpe ist, wobei der Schwallbehälter (2) auf seiner in Einbaulage der Innenwandung (3) des Behälters zugekehrten Seite ohne Boden ausgebildet ist und dessen eigenen Begrenzungswand (5) umlaufend mit der Innenwandung (3) des Behälters verschweißt ist, so dass der Boden als erste Begrenzungswand des volumens durch die Innenwandung des Behälters gebildet wird.

2. Behälter nach Anspruch 1, **dadurch gekennzeichnet, dass** die eigene Begrenzungswand (5) des Schwallbehälters (2) an der in Einbaulage der Innenwandung (3) des Behälters zugekehrten Seite einen umlaufenden Befestigungsflansch (4) aufweist.

3. Behälter nach Anspruch 2, **dadurch gekennzeichnet, dass** die Fügefläche (6) des Befestigungsflansches (4) profiliert ist.

4. Behälter nach Anspruch 2, **dadurch gekennzeichnet, dass** die Fügefläche (6) des Befestigungsflansches (4) mit Schmelzvorsprüngen (7) und/oder Schmelzansätzen versehen ist.

5. Behälter nach einem der Ansprüche 2 bis 4, **dadurch gekennzeichnet, dass** die eigene Begrenzungswandung (5) des Schwallbehälters (2) zumindest bereichsweise und bezogen auf den Umfang des Schwallbehälters (2) zumindest abschnittsweise flexibel ist.

6. Behälter nach Anspruch 5 **dadurch gekennzeichnet, dass** der Winkel zwischen dem Befestigungsflansch (4) und der eigenen des Schwallbehälters Begrenzungswand (5) variabel ist.

## Claims

1. Fuel tank made of thermoplastic synthetic material with functional built-in parts for ventilation and deaeration, for fuel-removal or the like, wherein one functional built-in part is connected to the inner wall (3) of the tank in a material-bonded manner in such a way that it defines, with the wall of said tank, a volume which is separate from the filling volume of the tank in such a way that the inner wall (3) of said tank serves directly as a first boundary wall of the said volume, **characterised in that** the functional built-in part is a surge container (2) with its own boundary wall (5) and with an electric fuel delivery pump arranged in the surge container, wherein said surge container (2) is constructed without a bottom on its side that faces towards the inner wall (3) of the tank when in the built-in condition, and the surge container's own boundary wall (5) is welded circumferentially to the inner wall (3) of the tank so that the bottom, as the first boundary wall of the volume, is formed by the inner wall of the tank.

2. Tank according to claim 1, **characterised in that** the surge container (2)'s own boundary wall (5) has a circumferential fastening flange (4) on the side that faces towards the inner wall (3) of the tank when in the built-in condition.

3. Tank according to claim 2, **characterised in that** the joining face (6) of the fastening flange (4) is profiled.

4. Tank according to claim 2, **characterised in that** the joining face (6) of the fastening flange (4) is provided with fusible projections (7) and/or fusible extensions.

5. Tank according to one of claims 2 to 4, **characterised in that** the surge container (2)'s own boundary wall (5) is flexible, at least in certain regions and, referred to the periphery of said surge container (2), at least in certain sections.

6. Tank according to claim 5, **characterised in that** the angle between the fastening flange (4) and the surge container's own boundary wall (5) is variable.

## Revendications

1. Réservoir de carburant en matériau thermoplastique comprenant des éléments encastrés fonctionnels pour l'aération et la purge, pour le prélèvement de carburant ou pour des fonctions similaires, dans lequel un élément encastré fonctionnel est relié par liaison de matière avec la paroi intérieure (3) du réservoir de telle sorte qu'il définit avec la paroi du réservoir un volume séparé du volume de remplissage du réservoir, de telle sorte que la paroi intérieure (3) du réservoir sert directement de première paroi de délimitation de ce volume, **caractérisé en ce que** l'élément encastré fonctionnel est un réservoir de projections (2) ayant une propre paroi de délimitation (5) et ayant une pompe d'alimentation de carburant électrique agencée dans le réservoir de projections, étant entendu que le réservoir de projections (2) est réalisé sans fond sur son côté dirigé vers la paroi intérieure (3) du réservoir dans la position de montage et sa propre paroi de délimitation (5) est soudée de façon périphérique avec la paroi intérieure (3) du réservoir, de telle sorte que le fond est réalisé comme première paroi de délimitation du volume au moyen de la paroi intérieure du réservoir.

2. Réservoir selon la revendication 1, **caractérisé en ce que** la propre paroi de délimitation (5) du réservoir de projections (2) présente une bride de fixation périphérique (4) sur le côté dirigé vers la paroi intérieure (3) du réservoir dans la position de montage.

3. Réservoir selon la revendication 2, **caractérisé en ce que** la surface de joint (6) de la bride de fixation (4) est profilée.

4. Réservoir selon la revendication 2, **caractérisé en ce que** la surface de joint (6) de la bride de fixation (4) est munie de saillies de fusion (7) et/ou de rebords de fusion.

5. Réservoir selon l'une des revendications 2 à 4, **caractérisé en ce que** la propre paroi de délimitation (5) du réservoir de projections (2) est flexible au moins dans certaines zones, et par rapport à la périphérie du réservoir de projections (2), au moins dans certaines sections.

6. Réservoir selon la revendication 5, **caractérisé en ce que** l'angle entre la bride de fixation (4) et la propre paroi de délimitation (5) du réservoir de projections est variable.
